# EUROPÄISCHE PATENTANMELDUNG

(11) **EP 4 831 762 A1**
(43) Veröffentlichungstag der Anmeldung: **28.10.2026**
(21) Anmeldenummer: 26166215.9
(22) Anmeldetag: 19.03.2026
(51) Int. Cl.: G05D 1/224, H04W 4/00

(54) **LATENZ-MITIGIERUNG BEIM BETRIEB TELEOPERIERTER FAHRZEUGE**

(30) Priorität: 23.04.2025 DE 102025001339
(71) Anmelder: Stellantis Auto SAS, 78300 Poissy (FR); FCA US LLC, Auburn Hills, MI 48326-2766 (US)
(72) Erfinder: FRANK, Sebastian, 65428 Rüsselsheim am Main (DE); EBERLE, Ulrich, 65428 Rüsselsheim am Main (DE)
(74) Vertreter: ESIP

(57) **Zusammenfassung**

Die Erfindung betrifft ein Verfahren zum Durchführen einer teleoperierten Fahrzeugführung, wobei ermittelt wird (S1), wenn ein erstes teleoperiertes Fahrzeug (1) und ein zweites teleoperiertes Fahrzeug (2) zusammen eine vorgegebene Bedingung bezüglich einer gemeinsamen Nutzung eines Verkehrsraums erfüllen, und wenn dies ermittelt wird, eine Netzwerkverbindung (3) zwischen einem ersten stationären Steuerstand (4), von welchem das erste teleoperierte Fahrzeug (1) ferngesteuert wird, und einem zweiten stationären Steuerstand (5), von welchem das zweite teleoperierte Fahrzeug (2) ferngesteuert wird, hergestellt wird (S2), wobei über die Netzwerkverbindung (3) aktuelle Daten über eine Teleoperation des ersten teleoperierten Fahrzeugs (1) durch den ersten stationären Steuerstand (4) an den zweiten stationären Steuerstand (5) übertragen werden (S3) und für den Fahrer am zweiten stationären Steuerstand (5) eine Information über die Daten ausgegeben wird (S4).

## Beschreibung

Die Erfindung betrifft ein Verfahren zum Durchführen einer teleoperierten Fahrzeugführung eines ersten Fahrzeugs aus einem ersten Steuerstand und eines zweiten Fahrzeugs aus einem zweiten Steuerstand.

Typische konventionelle Kraftfahrzeuge wie Personenkraftwagen sind darauf ausgelegt, dass deren Fahrzeugführung durch eine im Fahrzeug befindliche Person stattfindet. Mit zunehmendem Automatisierungsgrad ändert sich die Rolle dieser Person von einem Fahrzeugführer zur aktiven Fahrzeugführung zunehmend hin zur alleinigen Aufgabe der Überwachung der vom Fahrzeug selbstständig ausgeführten Fahrmanöver und Steuereingriffe. An der Spitze dieser Entwicklung stehen vollständig automatisierte Fahrzeuge, welche autonom nicht nur einzelne Manöver, sondern das Abfahren einer vollständigen geplanten Route durchführen können. Während ein menschlicher Fahrzeugführer in einem nicht-automatisierten Fahrzeug das alleinige Entscheidungsorgan des Fahrzeugs ist, übernimmt er auch zumindest in Teilen die Rolle von Aktoren, wenn durch seine Bewegungen Stellgrößen mechanisch (höchstens mit direkter Unterstützung) vorgegeben werden. Mit zunehmendem Automatisierungsgrad von Fahrzeugen sind jedoch Aktoren vorzusehen, beispielsweise elektrische oder hydraulische Aktoren, welche alle durch Steuerelektronik angesteuert werden, sodass ein Rechner des Fahrzeugs entsprechende Kommandos an die Aktoren übermitteln kann, welche diese dann mechanisch umsetzen. Dieser Umstand erlaubt es, eine Schnittstelle an einer digitalen Steuereinheit oder direkt an den Aktoren des Fahrzeugs zur Fahrzeugführung aus einer externen Zentrale anzusteuern. So ist die Möglichkeit einer Teleoperation des automatisierten Fahrzeugs eröffnet, bei der ein menschlicher Fahrzeugführer des Fahrzeugs eben nicht im Fahrzeug selbst Platz nehmen muss, sondern außerhalb des Fahrzeugs an einem stationären Arbeitsplatz sitzen kann, und Kommandos an diese Schnittstelle des Fahrzeugs vorgeben kann, welche per Datenübertragung, insbesondere drahtlos, an das Fahrzeug zur Ausführung übermittelt werden. Zudem können relevante Fahrzeuginformationen (zum Beispiel ein Videostrom mit Bildern aus einer Egoperspektive, beispielsweise vom Fahrersitz des Fahrzeugs aufgenommen) an den entfernt steuernden Fahrzeugführer übermittelt werden. Findet die Teleoperation in einer Umgebung mit weiteren Verkehrsteilnehmern statt, kann der menschliche Fahrzeugführer durch Erfassung der lokalen Umgebung des Fahrzeuges und darin befindlicher weiterer Verkehrsteilnehmer nötige Fahrzeugbewegungen (durch laterale/longitudinale Steuerung) zur Vermeidung von Verkehrsbehinderungen und Gefahrensituationen zur Erreichung eines Zielortes einleiten.

Die DE 10 2021 123 234 A1 betrifft in diesem Zusammenhang einen teleoperierenden Fahrzeugführer-Arbeitsplatz für ein teleoperiertes Kraftfahrzeug, wobei das Kraftfahrzeug eine Frontkamera, eine Heckkamera, eine linke Seitenkamera, die optional auf eine hintere linke Seite des Kraftfahrzeugs gerichtet ist, und eine rechte Seitenkamera, die optional auf eine hintere rechte Seite des Kraftfahrzeugs gerichtet ist, aufweist, und wobei das Kraftfahrzeug ausgestaltet ist, um jeweils von der Frontkamera, der Heckkamera, und der linken und der rechten Seitenkamera aufgenommene Bilder an den teleoperierenden Fahrzeugführer-Arbeitsplatz zu senden, wobei der teleoperierenden Fahrzeugführer-Arbeitsplatz ausgestaltet ist, um eine Anzeige der von dem Kraftfahrzeug empfangenen Bilder in Abhängigkeit einer Ausrichtung eines Kopfes eines teleoperierenden Fahrzeugführers und/oder in Abhängigkeit einer Blickrichtung des teleoperierenden Fahrzeugführers zu verändern.

Wenn ein automatisiert betriebenes Fahrzeug Schwierigkeiten hat, Entscheidungen zu treffen oder nicht in der Lage ist, eine bestimmte Situation im Straßenverkehr zu bewältigen, kann ein Fahrzeugführer aus einem stationären Steuerstand herangezogen werden, um ferngesteuert die Fahrzeugführung zwischenzeitlich zu übernehmen. Es gibt dabei mehrere Gründe, warum der Einsatz eines entfernt steuernden Fahrzeugführers für grundsätzlich automatisiert betriebene Fahrzeuge sinnvoll sein kann: Liegt eine komplexe Situation vor, die den Algorithmus des automatisierten Fahrzeugs zur selbstständigen Fahrsteuerung überfordert, kann ein menschlicher Fahrzeugführer aus einem stationären Steuerstand durch manuelle Übernahme des Fahrzeuges und entsprechender Fernsteuerung das Fahrzeug sicher durch die Situation führen. In anderen Fällen kann das Fahrsteuerungssystem des Fahrzeugs möglicherweise selbst nicht in der Lage sein, eine optimale Entscheidung zu treffen. Auch hierbei kann der Fahrzeugführer aus dem stationären Steuerstand helfen, indem er entsprechende Entscheidungen trifft, die auf seiner menschlichen Erfahrung und Intuition basieren. Auch können damit Kosten eingespart werden, da ein automatisiertes Fahrzeug auch grundsätzlich autonom betrieben werden kann, wenn noch nicht jede Verkehrssituation von diesem garantiert autonom gehandhabt werden kann. Außerdem kann für manche Situationen die menschliche Erfahrung im Gegensatz zur maschinellen wertvoll sein, beispielsweise auf weitere menschliche Interaktion in der Umgebung des ferngesteuerten Fahrzeugs adäquat reagieren zu können. Liegen beispielsweise Handzeichen von umherstehenden Personen oder verbale Aufforderung von Passanten vor, kann unter Umständen das Fahrzeug diese nicht interpretieren, der Fahrzeugführer aus der Entfernung jedoch schon. Auch bei technischen Problemen kann ein menschlicher Fahrer noch in der Lage sein, das Fahrzeug sicher zu bewegen oder an einen sicheren Ort zu verschieben, während der Algorithmus des automatischen Fahrsteuerungssystems dies nicht mehr kann. In Zusammenschau kann der Einsatz von teleoperierenden Fahrzeugführern für automatisierte Fahrzeuge in bestimmten Situationen die Sicherheit erhöhen, die Effizienz steigern und die Kosten senken.

Nachteilig an der Übernahme eines Fahrzeugs in Teleoperation ist in geringem Maße die Latenz, das heißt die Zeitverzögerung, die bei der Übertragung der Steuerbefehle aus dem stationären Steuerstand zum Fahrzeug, sowie in hohem Maße die Latenz, die bei der Übertragung des Videostroms aus dem Fahrzeug aus Egoperspektive an den stationären Steuerstand jeweils zwangsläufig auftritt. Das Fahrzeug zeichnet eine Fahrszene auf, sendet diese zum Beispiel über 5G an einen Router am Teleoperationsstand, welcher diese Fahrszene anschließend darstellt. Dieser Vorgang benötigt Zeit, sodass sich das Fahrzeug bei der Darstellung am Fahrerstand bereits weiterbewegt hat. Bei einer Geschwindigkeit von 30 km/h und einer Latenz von 300 ms befindet sich das Fahrzeug bei der aktuellen Darstellung bereits 2,5 m weiter. Während die drahtlose Übertragung, d. h. der Lauf der Funksignale, mit Lichtgeschwindigkeit und damit quasi in Echtzeit erfolgt, tragen eine Kamera zur Aufnahme der Bildsequenzen für das Video, Module zur Übertragung der Daten (welche unter Umständen die Ausführung algorithmischer Rechenschritte erfordern), ein Bildschirm im stationären Steuerstand, wesentlich zu dieser Latenz bei; im Falle der Steuerkommandos ist die Latenz im Wesentlichen durch Beiträge der Eingabeeinheiten am stationären Steuerstand, Module zur Verarbeitung und Übertragung sowie zum Empfang dieser Daten und den Aktoren im Fahrzeug zusammengesetzt.

Die Latenzen, insbesondere die, die bei der Übertragung des Videostroms vom Fahrzeug entsteht, vermindern das Situationsbewusstsein des Fahrzeugführers am stationären Steuerstand und können dazu führen, dass der Fahrzeugführer eine so verzögerte oder ungenaue Wahrnehmung der Umgebung um das Fahrzeug erhält, dass Fehlentscheidungen oder Fehlreaktionen resultieren. Umgekehrt führt die Latenz der Datenübertragung aus dem stationären Steuerstand zum Fahrzeug unter Umständen dazu, dass der Fahrzeugführer Schwierigkeiten hat, das Fahrzeug präzise und konvergent auf eine Soll-Trajektorie zu steuern, sodass mehrfache Überschwinger in der Steuerung zu Schwingungen insbesondere in der Seitenbewegung des Fahrzeugs führen können. Je größer die Latenzen in beiden Richtungen, umso höher die kognitive Belastung des Fahrzeugführers. Die benötigte höhere Aufmerksamkeit kann zu Stress und Ermüdung des Fahrzeugführers führen. In gewissen Grenzen können diese Latenzen durch technische Maßnahmen verringert werden, beispielsweise durch Verwendung von drahtlosen Funknetzen mit höherer Bandbreite, geringeren Übertragungs-Latenzen, durch Nutzung von dedizierten Kommunikationskanälen, usw.; teleoperierende Fahrer sollten daher ein besonderes Training anwenden, um die Latenz zu berücksichtigen.

Das Problem der Latenz kann sich potenziell verstärken, wenn sich zwei oder mehr teleoperierte Fahrzeuge den gleichen Verkehrsraum teilen: Die Steuersignale eines Fahrers aus einem ersten stationären Steuerstand werden an ein erstes Fahrzeug mit einer ersten Zeitverzögerung übermittelt und umgesetzt. Ein zweites teleoperiertes Fahrzeug in der Nähe des ersten Fahrzeugs erfasst mit einer Kamera das erste Fahrzeug und übermittelt mit einer zweiten Zeitverzögerung die Kamerainformation an einen zweiten Teleoperationsstand, von welchem das zweite Fahrzeug ferngesteuert wird. Die zweite Zeitverzögerung kann jedoch kausal erst auftreten, nachdem die erste Zeitverzögerung zur physischen Wirkung des Steuerkommandos am ersten stationären Steuerstand aufgetreten ist, da definitionsgemäß die Wirkung des Steuerkommandos mit der ersten Zeitverzögerung eintritt. Bis somit eine Steuereingabe am ersten stationären Steuerstand mit dem Zwischenschritt der Entfaltung ihrer Wirkung in der Realität am zweiten Steuerstand in ihrer Wirkung beobachtet werden kann, addieren sich zwei Abschnitte der Zeitverzögerungen.

Aufgabe der Erfindung ist es, dieses Problem der sich akkumulierenden Latenzen beim Aufeinandertreffen von zwei teleoperierten Fahrzeugen abzuschwächen.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Durchführen einer teleoperierten Fahrzeugführung, wobei ermittelt wird, wenn ein erstes teleoperiertes Fahrzeug und ein zweites teleoperiertes Fahrzeug zusammen eine vorgegebene Bedingung bezüglich einer gemeinsamen Nutzung eines Verkehrsraums erfüllen, und wenn dies ermittelt wird, eine Netzwerkverbindung zwischen einem ersten stationären Steuerstand, von welchem das erste teleoperierte Fahrzeug ferngesteuert wird, und einem zweiten stationären Steuerstand, von welchem das zweite teleoperierte Fahrzeug ferngesteuert wird, hergestellt wird, wobei über die Netzwerkverbindung aktuelle Daten über eine Teleoperation des ersten teleoperierten Fahrzeugs durch den ersten stationären Steuerstand an den zweiten stationären Steuerstand übertragen werden und für den Fahrer am zweiten stationären Steuerstand eine Information über die Daten ausgegeben wird.

Sobald sich zwei teleoperierte Fahrzeuge den gleichen Verkehrsraum teilen, wird die Netzwerkverbindung genutzt, um Daten zu übertragen. Hierzu werden insbesondere die Positionen der Fahrzeuge überwacht. Befinden sich zwei teleoperierte Fahrzeuge insbesondere in räumlicher Nähe zueinander, werden Verbindungsdaten zwischen den stationären Steuerständen ausgetauscht, z.B. können diese jeweils an einen TCP/IP Socket gebunden sein, an welchem sie Verbindungen erwarten. Die stationären Steuerstände verbinden sich insbesondere damit gegenseitig. Die räumliche Nähe der teleoperierten Fahrzeuge kann über eine euklidische Distanz zwischen den Fahrzeugen ermittelt werden, und insbesondere mit einem Schwellwert verglichen werden. Es ist ebenfalls denkbar, dass räumliche Nähe und eine gemeinsame Route zur Berücksichtigung der Nähe herangezogen werden.

Es bestehen vielfältige Möglichkeiten, wie vom ersten stationären Steuerstand an den zweiten stationären Steuerstand übertragene Daten über die Teleoperation des ersten teleoperierten Fahrzeugs dem Fahrer des zweiten teleoperierten Fahrzeugs am zweiten stationären Steuerstand ausgegeben werden. Bevorzugt wird eine Visualisierung der Daten ausgeführt, beispielsweise durch Überlagerung der visualisieren Daten über ein angezeigtes Kamerabild der Umgebung des zweiten teleoperierten Fahrzeugs, welches am zweiten teleoperierten Fahrzeug mittels einer Kameraeinheit aufgenommen wird und am zweiten stationären Steuerstand in einem Videodatenstrom angezeigt wird.

Hierbei können geplante Fahrmanöver oder Steuerkommandos für das erste teleoperierte Fahrzeug visuell am zweiten stationären Steuerstand insbesondere kontaktanalog zum angezeigten ersten teleoperierten Fahrzeug angezeigt werden, auch Beschleunigungen, insbesondere eine Längsbeschleunigung, des ersten teleoperierten Fahrzeugs, Missionsinformationen über das erste teleoperierte Fahrzeug, wie beispielsweise dass das erste teleoperierte Fahrzeug sein Ziel gerade erreicht hat, oder im Begriff ist, seinen aktuellen Standort zu verlassen, ob Personen an Bord des ersten teleoperierten Fahrzeugs sind, insbesondere chauffierte, ob zu erwarten ist, dass eine Türe des ersten teleoperierten Fahrzeugs insbesondere aufgrund der Personenbeförderung in naher Zukunft geöffnet wird, auf welcher Seite eine solche Person sitzt, sowie Informationen über eine geplante Bewegungsbahn des ersten teleoperierten Fahrzeugs auf der Straße, eine geplante Route, eine aktuelle Latenz in der Übertragung vom ersten stationären Steuerstand zum ersten teleoperierten Fahrzeug und vom ersten stationären Steuerstand zum ersten teleoperierten Fahrzeug, Fehler in dieser Übertragung, Fehler am stationären Steuerstand, Fehler am ersten teleoperierten Fahrzeug, ein Automatisierungszustand des ersten teleoperierten Fahrzeugs, insbesondere ob ein Notbremsassistent aktiv ist, und Anderes.

Liegt die vorgegebene Bedingung bezüglich der gemeinsamen Nutzung des Verkehrsraums zwischen dem ersten teleoperierten Fahrzeug und dem zweiten teleoperierten Fahrzeug nicht länger vor, oder ist diese Bedingung einen vorgegebenen Zeitraum über nicht mehr erfüllt gewesen, nachdem sie ursprünglich erfüllt gewesen ist, kann die Netzwerkverbindung wieder beendet werden. Die Netzwerkverbindung kann auch beendet werden, wenn eine erkannte Nähe der teleoperierten Fahrzeuge zueinander einen vorgegebenen Grenzwert wieder überschreiten.

Es ist eine vorteilhafte Wirkung der Erfindung, dass durch Herstellung der Netzwerkverbindung zwischen dem ersten stationären Steuerstand und dem zweiten stationären Steuerstand eine Übertragung von Daten mit geringerer Latenz erfolgen kann, als äquivalent eine kausale Wirkungskette eine entsprechende Information am zweiten stationären Steuerstand erkennen lässt, nachdem über diese Wirkungskette insbesondere durch Erkennung dieser Daten in ihrer Auswirkung mittels der Sensoreinheit des zweiten teleoperierten Fahrzeugs und nach Übertragung an den zweiten stationären Steuerstand eine entsprechende Information ankommt.

Gemäß einer vorteilhaften Ausführungsform ist die vorgegebene Bedingung eine Unterschreitung eines Grenzwerts einer Euklidischen Distanz zwischen dem ersten teleoperierten Fahrzeug und dem zweiten teleoperierten Fahrzeug. Die Euklidischen Distanz kann insbesondere dadurch ermittelt werden, dass die Position des ersten teleoperierten Fahrzeugs und die Position des zweiten teleoperierten Fahrzeugs möglichst zum gleichen Zeitpunkt ermittelt werden und miteinander verglichen werden.

Gemäß einer weiteren vorteilhaften Ausführungsform berücksichtigt die vorgegebene Bedingung eine geplante Route des ersten teleoperierten Fahrzeugs und/oder eine geplante Route des zweiten teleoperierten Fahrzeugs. Somit kann über die aktuellen Positionen hinausgehend eine zukünftige jeweilige Position der teleoperierten Fahrzeuge berücksichtigt werden, da eine geplante Route einen Hinweis auf eine zukünftige Position gibt. Es kann somit eine Netzwerkverbindung zwischen zwei stationären Steuerständen hergestellt werden, deren ferngesteuerte Fahrzeuge sich aktuell noch nicht in einem engen Bereich eines selben Orts befinden, jedoch absehbar sich annähern und somit potentiell in Kontakt miteinander treten.

Gemäß einer weiteren vorteilhaften Ausführungsform ist die vorgegebene Bedingung erfüllt, wenn durch eine Sensoreinheit des zweiten teleoperierten Fahrzeugs ein Identifikationsmerkmal des ersten teleoperierten Fahrzeugs erfasst und erkannt wird.

Gemäß einer weiteren vorteilhaften Ausführungsform ist das Identifikationsmerkmal ein visuelles Merkmal ist und die Sensoreinheit des zweiten teleoperierten Fahrzeugs umfasst eine Kameraeinheit. Dies setzt voraus, dass die teleoperierten Fahrzeuge über eine Identifikationseinrichtung vor Ort verfügen, z.B. einen visuell auslesbaren QR-Code, welcher insbesondere auf allen Seiten eines teleoperierten Fahrzeugs angebracht ist. Wird ein teleoperiertes Fahrzeug mit einem solchen QR-Code von einer Kamera eines weiteren teleoperierten Fahrzeugs erfasst, steht die Information zur Verfügung, dass sich die beiden Fahrzeuge in räumlicher Nähe zueinander befinden, und die Netzwerkverbindung wird hergestellt.

Gemäß einer weiteren vorteilhaften Ausführungsform werden über die Netzwerkverbindung Daten über einen Bewegungszustand des ersten teleoperierten Fahrzeugs an den zweiten stationären Steuerstand übertragen und für den Fahrer am zweiten stationären Steuerstand wird eine Information über den Bewegungszustand ausgegeben. Der Bewegungszustand des ersten teleoperierten Fahrzeugs umfasst beispielsweise eine Geschwindigkeit des ersten teleoperierten Fahrzeugs, eine aktuelle Position und/oder eine Orientierung des ersten teleoperierten Fahrzeugs, insbesondere eine Kompassausrichtung.

Gemäß einer weiteren vorteilhaften Ausführungsform werden über die Netzwerkverbindung technische Daten über eine Fernsteuerung des ersten teleoperierten Fahrzeugs durch den ersten stationären Steuerstand an den zweiten stationären Steuerstand übertragen und für den Fahrer am zweiten stationären Steuerstand wird eine Information über die technischen Daten der Fernsteuerung ausgegeben. Die technischen Daten über die Fernsteuerung des ersten teleoperierten Fahrzeugs durch den ersten stationären Steuerstand betreffen beispielsweise aktuelle Latenzen zwischen dem ersten stationären Steuerstand und dem ersten teleoperierten Fahrzeug, insbesondere betreffend die Übertragung von Steuerkommandos an das erste teleoperierten Fahrzeug, jedoch auch im umgekehrten Kommunikationskanal die Latenz der Übertragung einer Umfeld-Perzeption durch das erste teleoperierten Fahrzeug zurück an den ersten stationären Steuerstand. Jedoch auch Fehlerzustände am ersten stationären Steuerstand, am ersten teleoperierten Fahrzeug, in einer Verbindung zwischen beiden und weitere technische Gegebenheiten können durch den ersten stationären Steuerstand mithilfe der Netzwerkverbindung an den zweiten stationären Steuerstand somit übermittelt werden.

Gemäß einer weiteren vorteilhaften Ausführungsform werden über die Netzwerkverbindung Daten über ein Steuerkommando des Fahrers am ersten stationären Steuerstand für das erste teleoperierte Fahrzeug an den zweiten stationären Steuerstand übertragen und für den Fahrer am zweiten stationären Steuerstand wird eine Information über das Steuerkommando ausgegeben. Solche Steuerkommandos betreffen die von einem Fahrer am ersten stationären Steuerstand durchgeführten Steuerkommandos, welche an das erste Fahrzeug zur aktorischen Umsetzung für eine physische Wirkung am ersten teleoperierten Fahrzeug übermittelt werden. Auch Soll-Werte können übermittelt werden, beispielsweise vorgegebene Beschleunigungen, die mithilfe eines Gaspedals oder eines Lenkradschalters vorgegeben werden. Dasselbe trifft auf Krümmungen für Kurvenfahrten zu, auch eine Betätigung eines Fahrtrichtungswechselanzeigers oder einer Warnblinkeranlage kann direkt zwischen den Steuerbeständen übermittelt werden.

Gemäß einer weiteren vorteilhaften Ausführungsform werden über die Netzwerkverbindung Daten über einen Personentransport im ersten teleoperierten Fahrzeug ausgegeben, an den zweiten stationären Steuerstand übertragen und für den Fahrer am zweiten stationären Steuerstand wird eine Information über den Personentransport ausgegeben. Bei einem Personentransport kann insbesondere die Anzahl der transportierten Insassen und/oder eine jeweilige Position der transportierten Insassen an den zweiten stationären Steuerstand übermittelt werden, sodass durch den dortigen Fahrer abgeschätzt werden kann, ob beispielsweise eine Person in naher Zukunft im Begriff ist, auszusteigen. Auch Missionsinformationen können in diesem Zusammenhang übertragen werden, beispielsweise das Erreichen eines Ziels des Personentransports.

Gemäß einer weiteren vorteilhaften Ausführungsform werden über die Netzwerkverbindung Daten über eine geplante Route oder eine geplante Bewegungsbahn des ersten teleoperierten Fahrzeugs auf der Straße an den zweiten stationären Steuerstand übertragen und für den Fahrer wird am zweiten stationären Steuerstand eine Information über die geplante Route und/oder die geplante Bewegungsbahn ausgegeben.

Gemäß einer weiteren vorteilhaften Ausführungsform wird am zweiten stationären Steuerstand eine ausgegebene Information durch Überlagerung über angezeigte Kameradaten aus dem zweiten teleoperierten Fahrzeug visualisiert. Die Visualisierung wird bevorzugt augmentierend am zweiten stationären Steuerstand angezeigt, d. h. überlagert auf eine Umfeldanzeige, welche auf den Sensordaten des zweiten teleoperierten Fahrzeugs basiert und die am zweiten stationären Steuerstand dem dortigen Fahrer angezeigt werden. Bevorzugt erfolgt die Visualisierung kontaktanalog zum auf einer Anzeigeeinheit des zweiten stationären Steuerstands sichtbaren ersten teleoperierten Fahrzeug, welches beispielsweise mit einer Kamera des zweiten teleoperierten Fahrzeugs erfasst wird.

Ein weiterer Aspekt der Erfindung betrifft ein System zum Durchführen einer teleoperierten Fahrzeugführung eines ersten Fahrzeugs aus einem ersten Steuerstand und eines zweiten Fahrzeugs aus einem zweiten Steuerstand, wobei eine Vergleichseinheit zur Ermittlung ausgeführt ist, wenn das erste teleoperierte Fahrzeug und das zweite teleoperierte Fahrzeug zusammen eine vorgegebene Bedingung bezüglich einer gemeinsamen Nutzung eines Verkehrsraums erfüllen, und wenn dies ermittelt wird, eine Netzwerkverbindung zwischen dem ersten stationären Steuerstand und dem zweiten stationären Steuerstand herzustellen, und über die Netzwerkverbindung aktuelle Daten über eine Teleoperation des ersten Fahrzeugs durch den ersten Steuerstand an den zweiten stationären Steuerstand zu übertragen und für den Fahrer am zweiten stationären Steuerstand eine Information über die Daten auszugeben.

Vorteile und bevorzugte Weiterbildungen des vorgeschlagenen Systems ergeben sich durch eine analoge und sinngemäße Übertragung der im Zusammenhang mit dem vorgeschlagenen Verfahren vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist.

### Es zeigen:

Fig. 1: Ein Verfahren zum Durchführen einer teleoperierten Fahrzeugführung mit mehreren teleoperierten Fahrzeugen gemäß einem Ausführungsbeispiel der Erfindung.
Fig. 2: Einen schematischen Informationsfluss beim Aufeinandertreffen teleoperierter Fahrzeuge gemäß einem Ausführungsbeispiel der Erfindung.
Fig. 3: Eine Anordnung zur Steuerung teleoperierter Fahrzeuge gemäß einem Ausführungsbeispiel der Erfindung.

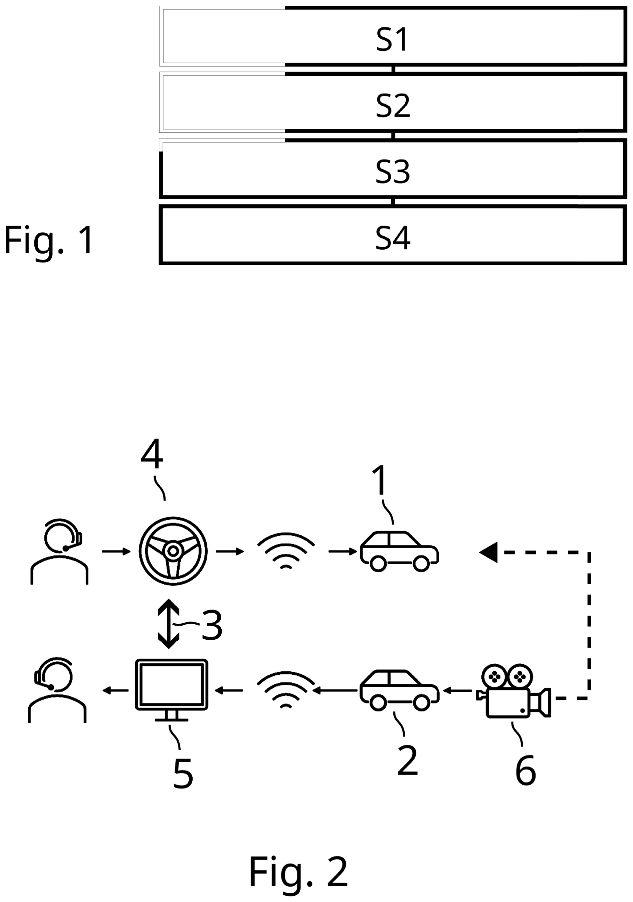

Fig. 1 zeigt ein Verfahren zum Durchführen einer teleoperierten Fahrzeugführung, wobei ermittelt wird S1, wenn ein erstes teleoperiertes Fahrzeug 1 und ein zweites teleoperiertes Fahrzeug 2 zusammen eine vorgegebene Bedingung bezüglich einer gemeinsamen Nutzung eines Verkehrsraums erfüllen, und wenn dies ermittelt wird, eine Netzwerkverbindung 3 zwischen einem ersten stationären Steuerstand 4, von welchem das erste teleoperierte Fahrzeug 1 ferngesteuert wird, und einem zweiten stationären Steuerstand 5, von welchem das zweite teleoperierte Fahrzeug 2 ferngesteuert wird, hergestellt wird S2, wobei über die Netzwerkverbindung 3 aktuelle Daten über eine Teleoperation des ersten teleoperierten Fahrzeugs 1 durch den ersten stationären Steuerstand 4 an den zweiten stationären Steuerstand 5 übertragen werden S3 und für den Fahrer am zweiten stationären Steuerstand 5 eine Information über die Daten ausgegeben wird S4.

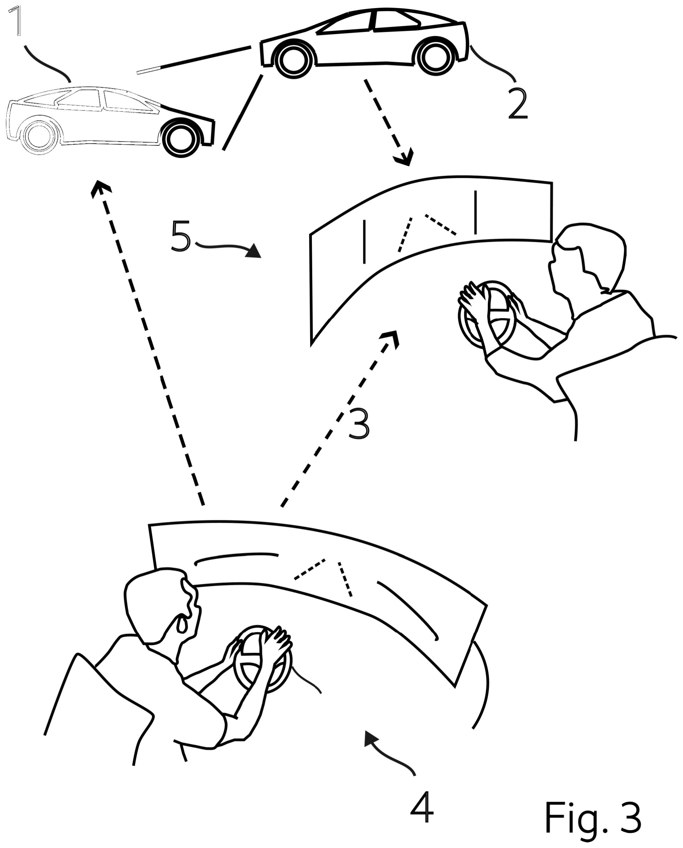

Fig. 2 zeigt schematisch eine Wirkungskette bei einer konventionellen Übertragung von Steuersignalen von einem jeweiligen stationären Steuerstand 4,5 an ferngesteuerte Fahrzeuge 1,2 sowie die Datenerfassung von einem jeweiligen Fahrzeug 1,2, sowie die verkürzte Übermittlung über eine Netzwerkverbindung 3. Angesteuert aus zwei stationären Steuerständen 4,5 treffen im gleichen Verkehrsraum ein erstes Fahrzeug 1 und ein zweites Fahrzeug 2 aufeinander. Das zweite Fahrzeug 2 ermittelt mit einer Sensoreinheit 6 Daten über das erste Fahrzeug 1 und übermittelt diese an den zweiten stationären Steuerstand 5. Fig. 2 zeigt damit zwei Teledriving Systeme. Dargestellt ist, dass ein Steuerkommando, zum Beispiel an der Lenkung, durch den Fahrer am ersten stationären Steuerstand 4 an das erste teleoperierte Fahrzeug 1 gesendet wird. Das erste teleoperierte Fahrzeug 1 setzt diese Steuerung anschließend um. Die geänderte Bewegung des ersten teleoperierten Fahrzeug 1 wird durch die Sensoreinheit 6 mit einer Kamera des zweiten teleoperierten Fahrzeugs 2 aufgezeichnet, verarbeitet und über eine Funkverbindung an den zweiten stationären Steuerstand 5 gesendet und dort dargestellt, sodass der Fahrer im zweiten stationären Steuerstand 5 wiederum hierauf reagieren kann. Zusammengefasst wird vom ersten stationären Steuerstand 4 eine Steuerungsänderung ausgesandt, welche erst nach der Übertragung und Umsetzung und Aufzeichnung über zwei Funkverbindungen und Fahrzeuge 1,2 vom Fahrer im zweiten stationären Steuerstand 5 wahrgenommen werden kann. Eine solche Wirkungskette wird noch einmal perspektivisch in der Fig. 3 skizziert. Der erste stationäre Steuerstand 4 sendet Kommandos an das erste teleoperierte Fahrzeug 1, das durch eine Kameraeinheit des zweiten teleoperierten Fahrzeugs 2 erfasst wird. Die Kameradaten werden ebenfalls über eine Funkverbindung an den zweiten stationären Steuerstand 5 übertragen und dort dem dortigen Fahrer angezeigt. Die Latenzen der Funkverbindungen und der physischen Wirkung einer beispielhaften Lenkeingabe am ersten stationären Steuerstand 4 addieren sich über diese Wirkungskette. Der Informationsfluss kann jedoch auch verkürzt über die Netzwerkverbindung 3 direkt vom ersten stationären Steuerstand 4 an den zweiten stationären Steuerstand 5 übertragen werden, wenn sich das erste teleoperierte Fahrzeug 1 und das zweite teleoperierte Fahrzeug 2 in räumlicher Nähe zueinander befinden. Diese Netzwerkverbindung 3 kann zum Beispiel von einem Datencenter in Form eines LAN bereitgestellt werden. Es ist auch denkbar, dass diese über das Internet aufgebaut wird, solange sie noch eine höhere Performance bietet als der Informationsfluss über das erste und zweite Fahrzeug 1,2. Über die Netzwerkverbindung 3 können eine oder mehere der folgenden Daten übertragen werden:
- Steuerungsbefehle, welche der Teledriver, am Teleoperationsarbeitsplatz, veranlasst hat:
   · Z.B. Beschleunigung, Krümmung, Blinker, ...
- Aktuelle Missionsinformationen:
   · Z.B. das Erreichen eines Ziels zum Personentransport
   · Anzahl der Insassen, Position der Insassen
- Aktuelle Zustandsinformationen:
   · Akute Fehlerzustände des Teledriving Systems (z.B. im MRM-Modus)
   · Geschwindigkeit Fahrzeug
   · Aktuelle Latenzen der Steuerung
   · Aktuelle Latenzen der Perzeption
   · Aktuelle Position und Orientierung des Fahrzeugs

### Beispiel 1:

Ein Fahrer kommandiert das zweite teleoperierte Fahrzeug 2 in einer Stadt an mehreren Parkbuchten vorbei und nähert sich einem ersten teleoperierten Fahrzeug 1. Auf seinen Monitoren ist keine Bewegung des ersten teleoperierten Fahrzeugs 1, also kein Ausparken zu erkennen. Durch das Mitteilen der Positionen der Fahrzeuge 1,2, ggf. über die stationären Steuerstände 4,5, an ein Datencenter wird eine räumliche Nähe der Fahrzeuge 1,2 festgestellt. Beide Steuerstände 4,5 verbinden sich und tauschen Daten aus. Der parkende Teleoperator beschleunigt sein Fahrzeug 1 zum Ausparken. Diese Beschleunigung wird an den Teleoperationsarbeitsplatz am zweiten stationären Steuerstand 5 übermittelt. Auch wenn es in dessen Kameradaten noch nicht (aufgrund der Latenzen) ersichtlich ist, wird oder hat bereits das parkende erste Fahrzeug 1 mit der Bewegung begonnen. Dem Fahrer am zweiten stationären Steuerstand 5 wird diese Beschleunigung als Pfeil in Fahrtrichtung auf seinem Display als Overlay angezeigt. Er kann bereits jetzt nötige Steuerbefehle zur Vermeidung einer kritischen Situation einleiten, bevor er die reale Fahrsituation latenzbehaftet auf seinem Display wahrnimmt.

### Beispiel 2:

Ein Fahrer kommandiert das zweite teleoperierte Fahrzeug 2 auf einer freien Straße hinter einem ersten teleoperierten Fahrzeug 1. Eine Netzwerkverbindung 3 wird hergestellt. Der Teleoperator des ersten teleoperierten Fahrzeugs 1 hat sein Missionsziel erreicht: Ein Personentransport zu dieser Position. Vom ersten stationären Steuerstand 4 wird diese Information an den zweiten Teleoperationsarbeitsstand 5 übertragen. Der Insasse des ersten Fahrzeugs 1 sitzt hinter dem Fahrersitz. Es ist wahrscheinlich, dass er jetzt die Tür öffnen und aussteigen wird. Dies ist (noch) nicht im Display am zweiten stationären Steuerstand 5 zu erkennen. Der erste stationäre Steuerstand 4 überträgt jedoch bereits die Information "Personentransport Ziel erreicht" und "Insasse hinten links" an den zweiten stationären Steuerstand 5. Daraufhin wird am zweiten stationären Steuerstand 5 dem dortigen Fahrer auf seinem Display ein Overlay über das erste teleoperierte Fahrzeug 1 angezeigt, welches ein "Achtung" Zeichen darstellt, in welchem zum Beispiel ein Öffnen der Tür hinten links dargestellt ist. Der Fahrer am zweiten stationären Steuerstand 5 entschließt sich deshalb, das erste Fahrzeug 1 nicht zu überholen.

### Beispiel 3:

Wie in Beispiel 2, jedoch diesmal handelt es sich nicht um einen Personentransport, sondern der Fahrer des ersten teleoperierten Fahrzeugs 1 steuert dieses weiter. Dem Fahrer am zweiten stationären Steuerstand 5 wird die gesteigerte Latenz zwischen dem ersten stationären Steuerstand 4 und dem ersten Fahrzeug 1 mitgeteilt. Demnach wird dem Fahrer am zweiten stationären Steuerstand 5 ein Overlay über dem ersten Fahrzeug 1 angezeigt, in welchem ein "Achtung" Zeichen für mangelnde Verbindung dargestellt wird. Analog könnte hier auch ein Notmanöver durch den Fahrer am ersten stationären Steuerstand 4 eingeleitet werden, welches dann als Overlay eines "Achtung" Symbols am zweiten stationären Steuerstand 5 angezeigt wird.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

## Patentansprüche

1. Computerimplementiertes Verfahren zum Durchführen einer teleoperierten Fahrzeugführung, wobei ermittelt wird (S1), wenn ein erstes teleoperiertes Fahrzeug (1) und ein zweites teleoperiertes Fahrzeug (2) zusammen eine vorgegebene Bedingung bezüglich einer gemeinsamen Nutzung eines Verkehrsraums erfüllen, und wenn dies ermittelt wird, eine Netzwerkverbindung (3) zwischen einem ersten stationären Steuerstand (4), von welchem das erste teleoperierte Fahrzeug (1) ferngesteuert wird, und einem zweiten stationären Steuerstand (5), von welchem das zweite teleoperierte Fahrzeug (2) ferngesteuert wird, hergestellt wird (S2), wobei über die Netzwerkverbindung (3) aktuelle Daten über eine Teleoperation des ersten teleoperierten Fahrzeugs (1) durch den ersten stationären Steuerstand (4) an den zweiten stationären Steuerstand (5) übertragen werden (S3) und für den Fahrer am zweiten stationären Steuerstand (5) eine Information über die Daten ausgegeben wird (S4).

2. Verfahren nach Anspruch 1,
wobei die vorgegebene Bedingung eine geplante Route des ersten teleoperierten Fahrzeugs (1) und/oder eine geplante Route des zweiten teleoperierten Fahrzeugs (2) berücksichtigt.

3. Verfahren nach einem der vorhergehenden Ansprüche,
wobei die vorgegebene Bedingung erfüllt ist, wenn durch eine Sensoreinheit (6) des zweiten teleoperierten Fahrzeugs (2) ein Identifikationsmerkmal des ersten teleoperierten Fahrzeugs (1) erfasst und erkannt wird.

4. Verfahren nach Anspruch 3,
wobei das Identifikationsmerkmal ein visuelles Merkmal ist und die Sensoreinheit (6) des zweiten teleoperierten Fahrzeugs (2) eine Kameraeinheit umfasst.

5. Verfahren nach einem der vorhergehenden Ansprüche,
wobei über die Netzwerkverbindung (3) Daten über einen Bewegungszustand des ersten teleoperierten Fahrzeugs (1) an den zweiten stationären Steuerstand (5) übertragen werden und für den Fahrer am zweiten stationären Steuerstand (5) eine Information über den Bewegungszustand ausgegeben wird.

6. Verfahren nach einem der vorhergehenden Ansprüche,
wobei über die Netzwerkverbindung (3) technische Daten über eine Fernsteuerung des ersten teleoperierten Fahrzeugs (1) durch den ersten stationären Steuerstand (4) an den zweiten stationären Steuerstand (5) übertragen werden und für den Fahrer am zweiten stationären Steuerstand (5) eine Information über die technischen Daten der Fernsteuerung ausgegeben werden.

7. Verfahren nach einem der vorhergehenden Ansprüche,
wobei über die Netzwerkverbindung (3) Daten über ein Steuerkommando des Fahrers am ersten stationären Steuerstand (4) für das erste teleoperierte Fahrzeug (1) an den zweiten stationären Steuerstand (5) übertragen werden und für den Fahrer am zweiten stationären Steuerstand (5) eine Information über das Steuerkommando ausgegeben wird.

8. Verfahren nach einem der vorhergehenden Ansprüche,
wobei über die Netzwerkverbindung (3) Daten über einen Personentransport im ersten teleoperierten Fahrzeug (1) ausgegeben werden, an den zweiten stationären Steuerstand (5) übertragen werden und für den Fahrer am zweiten stationären Steuerstand (5) eine Information über den Personentransport ausgegeben wird.

9. Verfahren nach einem der vorhergehenden Ansprüche,
wobei über die Netzwerkverbindung (3) Daten über eine geplante Route oder eine geplante Bewegungsbahn des ersten teleoperierten Fahrzeugs (1) auf der Straße an den zweiten stationären Steuerstand (5) übertragen werden und für den Fahrer am zweiten stationären Steuerstand (5) eine Information über die geplante Route und/oder die geplante Bewegungsbahn ausgegeben wird.

10. Verfahren nach einem der vorhergehenden Ansprüche,
wobei am zweiten stationären Steuerstand (5) eine ausgegebene Information durch Überlagerung über angezeigte Kameradaten aus dem zweiten teleoperierten Fahrzeug (2) visualisiert werden.
